# EUROPEAN PATENT APPLICATION

(11) **EP 2 538 521 A1**
(43) Date of publication of application: **26.12.2012**
(21) Application number: 12168252.0
(22) Date of filing: 16.05.2012
(51) Int. Cl.: H02J 7/00

(54) **Voltage transformation system**

(30) Priority: 31.05.2011 SE 1150510
(71) Applicant: Scania CV AB, 151 87 Södertälje (SE)
(72) Inventor: Ledfelt, Gunnar, 155 91 Nykvarn (SE)

(57) **Abstract**

A voltage transformation system (2) comprising
- a battery system comprising a first battery (4) and a second battery (6) connected to one another in series,
- an equaliser (8) connected to at least one of said first and second batteries and adapted to transforming a first voltage to a second voltage,
- a battery sensor (10) situated close to said first battery (4) and comprising a first current measuring circuit adapted to determining a value I₁ which represents the current through said first battery. The system further comprises

a second current measuring circuit (12) adapted to determining a value I_{EQ} which represents the equaliser's current to or from the battery system, and to conveying said value to the battery sensor,
and the battery sensor comprises a calculation unit adapted to receiving the values I₁ and I_{EQ} and to calculating on the basis of them a value I₂ which represents the current through said second battery. The invention comprises also a method in a voltage transformation system.

## Description

### Field of the invention

The present invention relates to a voltage transformation system and a method for such a system, according to the preambles of the independent claims.

### Background to the invention

In many vehicles, e.g. trucks and buses, a 24 volt d.c. system is used as a standard subsystem. The reason for having 24 volt electrical systems in vehicles is that such a high voltage (24 volts) is often required to power certain items on board the vehicle, e.g. the starter motor. A voltage of 24 volts is often achieved by connecting two 12 volt batteries in series.

12 volt supply voltage is often also required in vehicles, since some of their electrical equipment typically takes the form of electronic equipment running on 12 volts. Examples of such equipment often configured for 12 volts comprise lamps, navigation equipment and the like, safety devices as such as speed radar and distance radar, drive-away warning devices and the like, radio systems such as stereo installations, communications radio and the like.

Consequently, vehicles provided with 24 volt electrical systems have also to be provided with 12 volt supplies. This is generally achieved by a 12 volt transformer and more specifically by a 24/12 volt transformer.

Millions of battery sensors for cars are produced per annum. They often comprise a current shunt situated between the vehicle's electrical system and the battery's negative pole, and a battery voltmeter.

In more detail, a current shunt takes the form of a high-precision resistor with a known resistance, making it easy to determine the current by Ohm's law by measuring the voltage across the resistor.

There is great demand for battery sensors for heavy vehicles and battery sensor suppliers endeavour to meet this demand by supplementing 12 volt sensors by double voltage measurements in order to be able to measure the voltages across the two series-connected 12 volt batteries in a 24 volt system.

Heavy vehicles often provide their users with 12 volt supply by means of a 24/12 volt transformer. The amount of electrical power which traditional transformers can supply is limited by their performance. An alternative way of providing high powers for brief periods is to use a so-called equaliser. The 12 volt supply with which a vehicle is provided is supplied normally from the equaliser but it is possible, by connecting the 12 volt output to the midpoint between the two series-connected 12 volt batteries, to temporarily load the 12 volt supply with significantly more current than the equaliser alone could deliver. One of the 12 volt batteries then serves as energy reserve. The energy "borrowed" by the one battery has later to be "handed back", which is taken care of by the equaliser when the 12 volt consumption drops below the equaliser's power rating.

The patents and published patent applications cited below give examples of using an equaliser inter alia for batteries in 24 volt systems.

US-7,808,208 refers to an equalising circuit for vehicles which is intended to equalise the charge level between two batteries in a 24 volt system.

US-6,373,223 also refers to an equalising circuit for energy transfer between a number of batteries connected in series.

WO-2009/145709 refers to a voltage transformation system with an equaliser whereby battery imbalance detection and charge monitoring are current-based.

When battery sensors are used on heavy vehicles which have two batteries connected in series, the same current is supposed to pass through both batteries. Using an equaliser in voltage transformation makes it possible to not have the same current passing through both batteries, since the function of the equaliser is based inter alia on borrowing and handing back charge in one of the batteries. One solution to this problem would be to provide a battery sensor for each battery, but this would be expensive in requiring not only further hardware but also extra fitting work.

There is thus a difficulty in correctly measuring the status of the batteries when an equaliser is used, since the current through the batteries will not be the same.

The object of the present invention is to propose an improved voltage transformation system which makes it possible to determine correctly the status of the batteries and which is at the same time not expensive to implement.

### Summary of the invention

The above objects are achieved with the invention defined by the independent claims.

Preferred embodiments are defined by the dependent claims.

Battery models are based on measurements of temperature, current and voltage. Engine starting involves catering for rapid variations in current and voltage and a consequent requirement for the measurements to be "simultaneous" (to within a few ms). An external current meter has therefore to be able to measure at least as quickly as the current meter in the battery sensor and also be able to communicate with the battery sensor.

Using an equaliser for voltage transformation, e.g. from 24 volts to 12 volts, affects the charge offtake from the batteries, and the equaliser temporarily borrows charge from one battery and subsequently hands it back. This affects the magnitude of the currents through the two batteries.

Using only one battery sensor means supposing that the same current passes through both batteries, which is not the case here, since the equaliser affects the system.

Measuring the current to or from the equaliser, e.g. with a surface-mounted shunt, and transmitting information about the magnitude of this current to the battery sensor make it possible for the battery sensor to take it into account and calculate correctly the battery capacity and battery status according to any of the relevant calculation models.

An advantage of the invention is that it avoids using two battery sensors, one for each battery, in voltage transformation involving an equaliser. This results in cost saving in terms of less hardware and lower fitting costs.

According to an embodiment, the current of the equaliser is measured from the midpoint between two 12 volt batteries connected in series and the battery sensor is informed of the difference in the battery currents.

It is becoming increasingly common to wish to determine battery status, in which case the two status values which are important to determine are "state of charge" (SOC) and "state of health" (SOH). The SOC is determined for a relatively shorter time horizon (of the order of hours), the SOH for a longer time horizon (of the order of months).

It is important to be able to analyse how current and voltage vary during high power offtake, e.g. at engine start-ups, which are rapid processes "capturable" by sampling the current and voltage values at a measuring rate of the order, for example, of 1000 Hz.

The present invention is also applicable in so-called double-battery systems which comprise a power battery system and a starting battery system. In such an application the equaliser is connected to the power battery system.

### Brief description of drawings

Figure 1 is a schematic block diagram illustrating a first embodiment of the present invention.
Figure 2 is a schematic block diagram illustrating a second embodiment of the present invention.
Figure 3 is a schematic block diagram illustrating a third embodiment of the present invention.
Figure 4 is a flowchart illustrating the method according to the present invention.

### Detailed description of preferred embodiments of the invention

The invention will now be described in detail with reference to the attached drawings.

The present invention relates to a voltage transformation system 2 comprising a battery system which itself comprises a first battery 4 and a second battery 6 connected to one another in series, an equaliser 8 connected to at least one of said first and second batteries and adapted to transforming a first voltage V_{UT1} to a second voltage V_{UT2}, and a battery sensor 10 which is situated close to said first battery 4 and comprises a first current measuring circuit adapted to determining a value I₁ which represents the current through said first battery.

The system further comprises a second current measuring circuit 12 adapted to determining a value I_{EQ} which represents the equaliser's current to or from the battery system, and to conveying said value to the battery sensor which itself comprises a calculation unit adapted to receiving the values I₁ and I_{EQ} and to calculating on the basis of them a value I₂ which represents the current through said second battery. The current I_{EQ} at the connection between the battery system and the equaliser may pass in either direction, depending on what state the equaliser is in.

The current through the second battery is easily calculated by the calculation unit by the equation I₂ = I₁+I_{EQ}.

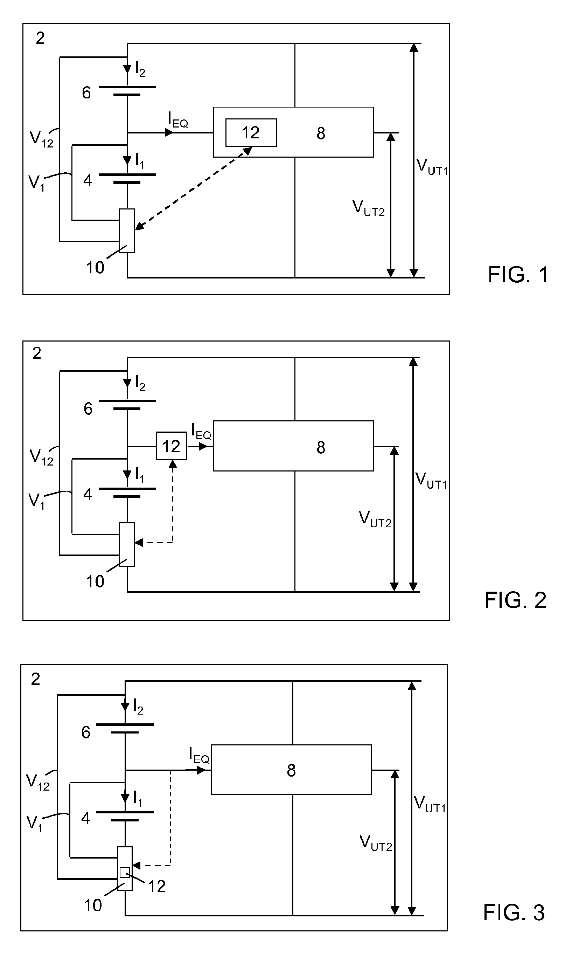

In Figures 1-3 the voltage across the first battery is denoted by V₁ and the voltage across the two batteries by V₁₂.

According to a variant of the voltage transformation system, the first voltage may have approximately double the amplitude of the second voltage. For example, the first voltage may be 12 volts and the second voltage 24 volts. In the diagram the output voltage across the two batteries is denoted by V_{UT1}, which substantially corresponds to V₁₂, and the output voltage received via the equaliser is denoted by V_{UT2}, which substantially corresponds to V₁.

According to an embodiment, the first current measuring circuit comprises a current shunt for measuring the current through the first battery, and first and second voltage measuring units for respective measurements of the voltage across said first and second batteries.

The second current measuring circuit preferably comprises also a current shunt.

As mentioned above, a current shunt comprises a high-precision resistor with a known resistance and the current through the resistor can easily be determined by Ohm's law by measuring the voltage across the resistor.

The first and/or second current measuring circuits may instead take the form of a so-called Hall element. The function of the Hall element is based on measuring the magnetic field which forms round a conductor which has current flowing through it. An advantage of this measuring technique is that it uses a current sensor which need not be connected directly to the conductor where the current is to be determined, since no resistance need be inserted, the current being read from outside the conductor.

Figures 1-3 depict three different embodiments of the invention which differ in where the second current measuring circuit is located.

In the embodiment in Figure 1, the second measuring circuit 12 is situated in the equaliser. According to this embodiment, the second current measuring circuit comprises a communication unit adapted to conducting with said battery sensor a transfer of information in one or both directions. The communication is here represented by a double-headed broken-line arrow. The information conveyed from the communication unit to battery sensor takes the form inter alia of values representing measured current I_{EQ} to and from the equaliser.

It may also be appropriate to convey information from the battery sensor to the equaliser, e.g. information about battery status which may be relevant to recharging the batteries in enabling the equaliser to optimise the recharge according to battery status.

The information exchange between the equaliser and the battery sensor may for example be via LIN (local interconnect network) or CAN (controller area network).

In the embodiment depicted in Figure 2, the second current measuring circuit 12 is a separate circuit situated on the connection between the equaliser and the battery system. Here again, the current measuring circuit comprises a communication unit for conveying information to the battery sensor, and the information exchange may for example be via LIN or CAN.

In the embodiment depicted in Figure 3, the second current measuring circuit 12 is situated in the battery sensor. In this embodiment the second current measuring circuit is integrated in the battery sensor, which may for example be achieved by having the connection between the battery system and the equaliser pass through the battery sensor. In Figure 3 this is represented by a broken-line arrow from the connection to the battery sensor 10.

For the battery sensor to be also able to measure rapid processes, e.g. when the starter motor is running, the measurements have to be made at a fast enough rate. The current I₁ through the first battery and the current I_{EQ} to and from the equaliser are preferably determined at a measuring frequency of more than 500 Hz. Still more preferably, the measuring rate is over 1000 Hz. The measuring rate may be predetermined and constant. The present invention does of course comprise also measurements at lower measuring rates, e.g. in situations where there is no justification for measuring so often. The measuring rate may also be variable and adaptive, e.g. measurements taking place more often when the starter motor is initiated and significantly less often when the vehicle is parked and the only current being drawn is for example for lighting and radio.

Determining the battery system's state of charge (SOC) and state of health (SOH) involves a number of parameters for each battery, e.g. the respective voltages across said first and second batteries and the respective currents through said first and second batteries. Other parameters often used are temperature values and times when currents and voltages are measured. These status values for the battery system may be calculated by the calculation unit or by an external unit which has access to necessary parameters, e.g. via LIN or CAN.

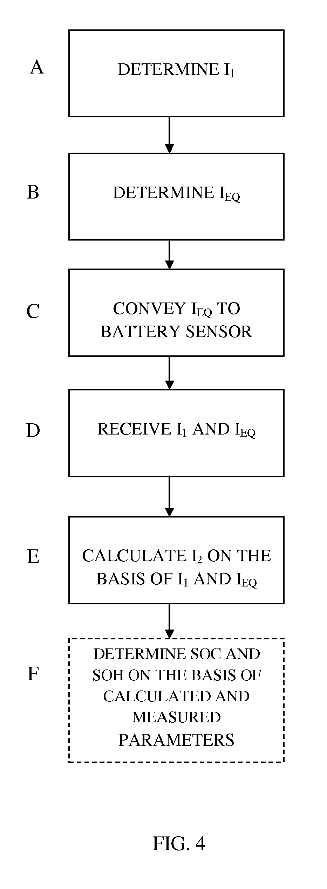

The invention comprises also a method in the voltage transformation system described above. The method is illustrated in general terms by the flowchart in Figure 4 and comprises
A) determining a value I₁ which represents the current through said first battery;
B) determining a value I_{EQ} which represents the equaliser's current to and from the battery system;
C) conveying said value I_{EQ} to the battery sensor;
D) receiving in the calculation unit the values I₁ and I_{EQ}, and
E) calculating on the basis of I₁ and I_{EQ} a value I₂ which represents the current through said second battery.

The measurement of I₁ and I_{EQ} take place in accordance with the method at a measuring rate which is preferably over 500 Hz and may be predetermined and constant or may vary. Other measuring rates may of course be appropriate as described above in relation to the description of the voltage transformation system.

The battery sensor is adapted to measuring and/or determining parameters needed for determining one or more status values, e.g. the battery system's state of charge (SOC) and state of health (SOH). These parameters comprise the respective voltages across said first and second batteries and the respective currents through said first and second batteries. Other parameters may be the temperatures of the batteries and the times when the measurements are made.

According to an embodiment, the method thus also comprises
F) determining on the basis of said parameters the battery system's state of charge (SOC) and state of health (SOH).

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A voltage transformation system (2) comprising
- a battery system comprising a first battery (4) and a second battery (6) connected to one another in series,
- an equaliser (8) connected to at least one of said first and second batteries and adapted to transforming a first voltage to a second voltage,
- a battery sensor (10) situated close to said first battery (4) and comprising a first current measuring circuit adapted to determining a value I₁ which represents the current through said first battery,
**characterised in that** the system further comprises
a second current measuring circuit (12) adapted to determining a value I_{EQ} which represents the equaliser's current to or from the battery system, and to conveying said value to the battery sensor,
and that the battery sensor comprises a calculation unit adapted to receiving the values I₁ and I_{EQ} and to calculating on the basis of them a value I₂ which represents the current through said second battery.

2. The voltage transformation system according to claim 1, in which said first current measuring circuit comprises a current shunt for measuring the current through said first battery, and first and second voltage measuring units for respective measurements of the voltage across said first and second batteries.

3. The voltage transformation system according to either of claims 1 and 2, in which said second current measuring circuit comprises a current shunt.

4. The voltage transformation system according to any one of claims 1-3, in which said equaliser comprises said second current measuring circuit.

5. The voltage transformation system according to any one of claims 1-3, in which said battery sensor comprises said second current measuring circuit.

6. The voltage transformation system according to any one of claims 1-4, in which said second current measuring circuit comprises a communication unit adapted to conducting with said battery sensor transfer of information in one or both directions.

7. The voltage transformation system according to any one of claims 1-6, in which I₁ and I_{EQ} are arranged to be determined at a measuring rate of more than 500 Hz.

8. The voltage transformation system according to any one of claims 1-7, in which I₁ and I_{EQ} are arranged to be determined at an adaptively varying measuring rate.

9. The voltage transformation system according to any one of claims 1-8, in which said battery sensor is adapted to measuring and/or determining parameters which are needed for determining one or more status values of the battery system.

10. The voltage transformation system according to claim 9, in which said parameters comprise the respective voltages across said first and second batteries and the respective currents through said first and second batteries.

11. A method in a voltage transformation system comprising
- a battery system comprising a first battery and a second battery connected to one another in series,
- an equaliser connected to at least one of said first and second batteries and adapted to transforming a first voltage to a second voltage,
- a battery sensor situated close to said first battery and comprising a first current measuring circuit and a calculation unit,
**characterised in that** the method comprises
A) determining a value I₁ which represents the current through said first battery;
B) determining a value I_{EQ} which represents the equaliser's current to or from the battery system;
C) conveying said value I_{EQ} to the battery sensor;
D) receiving in the calculation unit the values I₁ and I_{EQ}, and
E) calculating on the basis of I₁ and I_{EQ} a value I₂ which represents the current through said second battery.

12. The method according to claim 11, in which the voltage transformation system comprises a second current measuring circuit comprising a communication unit adapted to conducting with said battery sensor transfer of information in one or both directions.

13. The method according to either of claims 11 and 12, in which second current measuring circuit comprises a current shunt.

14. The method according to any one of claims 11-13, in which said first current measuring circuit comprises a current shunt for measuring the current through said first battery, and first and second voltage measuring units for respective measurements of the voltages across said first and second batteries.

15. The method according to any one of claims 11-14, in which I₁ and I_{EQ} are arranged to be determined at a measuring rate of more than 500 Hz.

16. The method according to any one of claims 11-15, in which I₁ and I_{EQ} are arranged to be determined at an adaptively varying measuring rate.

17. The method according to any one of claims 11-16, in which said battery sensor is adapted to measuring and/or determining parameters which are needed for determining one or more status values of the battery system.

18. The method according to claim 17, in which said parameters comprise the respective voltages across said first and second batteries and the respective currents through said first and second batteries.

19. The method according to either of claims 17 and 18, comprising F) determining on the basis of said parameters the battery system's state of charge (SOC) and state of health (SOH).
